# EUROPEAN PATENT APPLICATION

(11) **EP 4 763 354 A1**
(43) Date of publication of application: **24.06.2026**
(21) Application number: 25200710.9
(22) Date of filing: 08.09.2025
(51) Int. Cl.: B05C 5/02, B05C 9/06

(54) **SECONDARY BATTERY MANUFACTURING DEVICE AND SLOT-DIE UNIT FOR MANUFACTURING SECONDARY BATTERY**

(30) Priority: 17.12.2024 KR 20240189320
(71) Applicant: SAMSUNG SDI CO., LTD., Yongin-si, Gyeonggi-do 17084 (KR)
(72) Inventor: MOON, Sanghyup, Yongin-si, Gyeonggi-do 17084 (KR); KIM, SungSu, Yongin-si, Gyeonggi-do 17084 (KR)
(74) Representative: Michalski Hüttermann & Partner mbB

(57) **Abstract**

A secondary battery manufacturing device (70) including: a substrate transfer part (60) configured to transfer a substrate (100) along a transfer path; a dual slot-die (30) configured to coat the substrate (100) with an active material and including a lower die, a central die fixed on the lower die, and an upper die slidably attached on an upper surface of the central die, the dual slot-die having a lower discharge port between the lower die and the central die and an upper discharge port between the central die and the upper die; a gap adjustment part (24) configured to move the dual slot-die (30) to adjust a gap between the upper and lower discharge ports and the substrate (100); a controller (75) configured to drive the gap adjustment part; and an upper die supporter configured to slide the upper die to adjust and maintain a gap between the upper die and the substrate.

## Description

### BACKGROUND

### 1. Field

Aspects of embodiments of the present disclosure relate to a secondary battery manufacturing device and slot-die unit for manufacturing a secondary battery.

### 2. Description of the Related Art

Different from primary batteries that are not designed to be (re)charged, secondary batteries are designed to be discharged and recharged. Generally, a secondary battery includes an electrode assembly including (or formed of) positive and negative electrode plates and a separator.

The positive or negative electrode plates may be manufactured through a coating process of coating one or both sides of an electrode substrate with a mixture (e.g., a mixture of electrode materials), a roll pressing process of pressing and stretching the electrode plates coated with the mixture in the coating process to make the electrode plates thin and flat, a slitting process of cutting the coated electrode plates in multiple rows in a lengthwise direction to separate the electrode plates into individual electrode plates, and a notching process of transversely cutting the separated individual electrode plate to remove unnecessary portions and form tabs.

A dual slot-die may be used in the coating process. The dual slot-die is a device that coats a surface of a substrate with a mixture in a slurry state. The mixture coated on the substrate is formed in one layer, and in some cases, the mixture may have a two-layer stacked structure. A dual slot-die has two discharge part (or discharge ports) for forming a stacked mixture having a two-layer structure to form a double layer electrode (DLE).

However, the conventional dual slot-die to form a DLE cannot adjust a relative gap between each discharge part and a back roll. Because the conventional dual slot-die cannot implement a coating layer having a two-layer structure with different thicknesses, the range of application is limited.

The above information disclosed in this Background section is for enhancement of understanding of the background of the present disclosure, and therefore, it may contain information that does not constitute a related (or prior) art.

### SUMMARY

Embodiments of the present disclosure are directed to a secondary battery manufacturing device and a slot-die unit for manufacturing a secondary battery that can form multi-layered electrode layers with different thicknesses and prevent contamination of an uncoated portion or dragging of front and rear ends of a coated portion during intermittent (e.g., pattern) coating.

According to one aspect the invention is directed to a slot-die unit for manufacturing a secondary battery, the slot-die-unit including a dual slot-die being configured to be arranged to correspond to a substrate to be coated with an active material, the dual slot-die comprising: a lower die; a central die fixed on the lower die; and an upper die slidably on an upper surface of the central die, and wherein a lower discharge port is formed between the lower die and the central die and an upper discharge port is formed between the central die and the upper die, the lower and upper discharge ports being configured to discharge the active material to be coated on the substrate.

According to another aspect the invention is directed to a secondary battery manufacturing device comprising: a substrate transfer part configured to transfer a substrate along a transfer path; the above described dual slot-die unit; and a controller configured to drive a gap adjustment part of the dual slot die unit.

According to yet another aspect the invention is directed to a method for adjusting a gap between an upper die and a substrate, the method being performed with the above slot-die unit and comprising the steps of
- Adjusting a position of the upper die by slidingly moving the upper die with the upper die supporter, or
- Adjusting a position of the upper die by selecting the thickness of the gap plate; or
the method being performed with the above secondary battery manufacturing device and comprising the steps of
- Receiving a control signal from the controller and adjusting the gap by moving the dual slot-die based on the control signal with the servo motor, and/or
- Adjusting a position of the upper die by slidingly moving the upper die with the upper die supporter, or
- Adjusting a position of the upper die by selecting the thickness of the gap plate.

According to an embodiment of the present disclosure, a secondary battery manufacturing device includes a substrate transfer part configured to transfer a substrate along a transfer path; a dual slot-die configured to coat the substrate with an active material and including a lower die, a central die fixed on the lower die, and an upper die slidably installed on an upper surface of the central die, the dual slot-die having a lower discharge port formed between the lower die and the central die and an upper discharge port formed between the central die and the upper die; a gap adjustment part configured to move the dual slot-die to adjust a gap between the upper and lower discharge parts and the substrate; a controller configured to drive the gap adjustment part; and an upper die supporter configured to slide the upper die to adjust and maintain a gap between the upper die and the substrate.

According to another embodiment of the present disclosure, a slot-die unit for manufacturing a secondary battery is aligned with a substrate to be coated with an active material. The slot-die unit includes a lower die, a central die fixed on the lower die, an upper die slidably installed on an upper surface of the central die. The slot-die unit is configured to discharge the active material to be coated on the substrate and has a lower discharge port formed between the lower die and the central die and an upper discharge port formed between the central die and the upper die.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a perspective view of an electrode assembly including an electrode plate manufactured by a secondary battery manufacturing device according to an embodiment of the present disclosure;
FIG. 2 is a perspective view of an interior of a pouch-type secondary battery to which the electrode assembly shown in FIG. 1 is applied;
FIG. 3 is a cross-sectional view of a cylindrical secondary battery;
FIG. 4 is a cross-sectional view of a prismatic secondary battery;
FIG. 5 is a perspective view of a slot-die unit for manufacturing a secondary battery according to an embodiment of the present disclosure;
FIG. 6 is a side view of the dual slot-die shown in FIG. 5;
FIG. 7 is an enlarged view of a discharge part of the dual slot-die shown in FIG. 6;
FIG. 8 is a side view illustrating a state in which a gap plate is applied to the dual slot-die shown in FIG. 5;
FIG. 9 is an enlarged view illustrating discharge parts of the dual slot-die shown in FIG. 8;
FIG. 10 is a side view of a dual slot-die to which a gap plate thicker than the gap plate shown in FIG. 8 is applied;
FIG. 11 is an enlarged view of discharge parts of the dual slot-die shown in FIG. 10;
FIG. 12 is a perspective view of a slot-die unit according to another embodiment of the present disclosure;
FIG. 13 is a side view of a dual slot-die shown in FIG. 12;
FIG. 14 is a side cross-sectional view describing a method of adjusting a position of an upper die shown in FIG. 13;
FIG. 15 is a plan cross-sectional view describing a method of adjusting the position of the upper die shown in FIG. 13;
FIG. 16 is a diagram illustrating an exterior of a gap adjuster shown in FIG. 12;
FIG. 17 is a schematic diagram illustrating a secondary battery manufacturing device according to an embodiment of the present disclosure;
FIG. 18 is a perspective view illustrating a secondary battery pack manufactured by the secondary battery manufacturing device according to an embodiment of the present disclosure; and
FIG. 19 is a diagram illustrating a state in which the secondary battery pack shown in FIG. 18 is applied to a vehicle.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements.

References to two compared elements, features, etc. as being "the same" may mean that they are "substantially the same." Thus, the phrase "substantially the same" may include a case having a deviation that is considered low in the art, for example, a deviation of about 5% or less. In addition, uniformity of a parameter in a predetermined region may imply uniformity from an average perspective.

Although the terms first, second, and the like are used to describe various components, these components are substantially not limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The controller and/or any other relevant devices or components according to embodiments of the present disclosure described herein may be implemented utilizing any suitable hardware, firmware (e.g., an application-specific integrated circuit), software, and/or a suitable combination of software, firmware, and hardware. For example, the various components of the controller may be formed on one integrated circuit (IC) chip or on separate IC chips. Further, the various components of the controller may be implemented on a flexible printed circuit film, a tape carrier package (TCP), a printed circuit board (PCB), or formed on a same substrate as the controller. Further, the various components of the controller may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the exemplary embodiments of the present disclosure.

The terminology used herein is for the purpose of describing embodiments of the present disclosure and is not intended to limit the present disclosure.

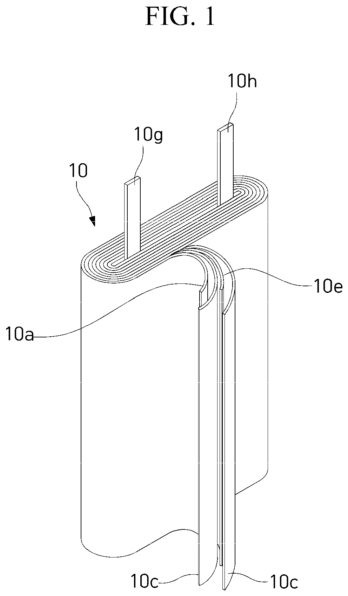

FIG. 1 is a schematic view of an electrode assembly 10 of a secondary battery which may be manufactured through an apparatus for manufacturing a secondary battery according to embodiments of the present disclosure.

An electrode assembly 10 may be formed by winding or stacking a first electrode plate 10a, a separator 10c, and a second electrode plate 10e, each of which are formed as thin plates or films. The first electrode plate 10a of the electrode assembly 10 may act as a negative electrode, and the second electrode plate 10e may act as a positive electrode. Of course, the reverse is also possible.

In other embodiments, the electrode assembly 10 may be a stack type rather than a winding type, but the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack.

In addition, one or more electrode assemblies may be stacked (e.g., arranged) such that long sides of the electrode assemblies are adjacent to each other and accommodated in a case, and the number of electrode assemblies in a case is not limited in the present disclosure.

The first electrode plate 10a may be formed by applying (e.g., coating or depositing) a first electrode active material, such as graphite or carbon, onto a first electrode substrate formed of a metal foil, such as copper, a copper alloy, nickel, or a nickel alloy. The first electrode plate 10a may include a first electrode tab 10g (e.g., a first uncoated portion), which is a region to which the first electrode active material is not applied. The first electrode tab 10g may be connected to an external first terminal. In some embodiments, when the first electrode plate 10a is manufactured, the first electrode tab 10g may be formed by being cut in advance to protrude to (or protrude from) one side of the electrode assembly 10, or the first electrode tab 10g may protrude to one side of the electrode assembly 10 more than (e.g., farther than or beyond) the separator 10c without being separately cut.

The second electrode plate 10e may be formed by applying (e.g., coating or depositing) a second electrode active material, such as a transition metal oxide, onto a second electrode substrate formed of a metal foil, such as aluminum or an aluminum alloy. The second electrode plate 10e may include a second electrode tab 10h (e.g., a second uncoated portion), which is a region to which the second electrode active material is not applied. The second electrode tab 10h may be connected to an external second terminal. In some embodiments, the second electrode tab 10h may be formed by being cut in advance to protrude to the other side (e.g., the opposite side) of the electrode assembly 10 when the second electrode plate 10e is manufactured, or the second electrode plate 10e may protrude to the other side of the electrode assembly more than (e.g., farther than or beyond) the separator 10c without being separately cut.

The electrode active material may have a two-layer structure as a coating layer coated through a dual slot-die 30 of a secondary battery manufacturing device 70, to be described later. The two-layer structure may be an active material layer discharged concurrently (e.g., almost simultaneously) through a lower discharge portion and an upper discharge portion. When only one of the lower discharge portion and the upper discharge portion is operated, an electrode active material layer having a single-layer structure may be implemented.

The separator 10c prevents a short-circuit between the first electrode plate 10a and the second electrode plate 10e while allowing movement of lithium ions therebetween. The separator 10c may be made of, for example, a polyethylene film, a polypropylene film, a polyethylene-polypropylene film, or the like.

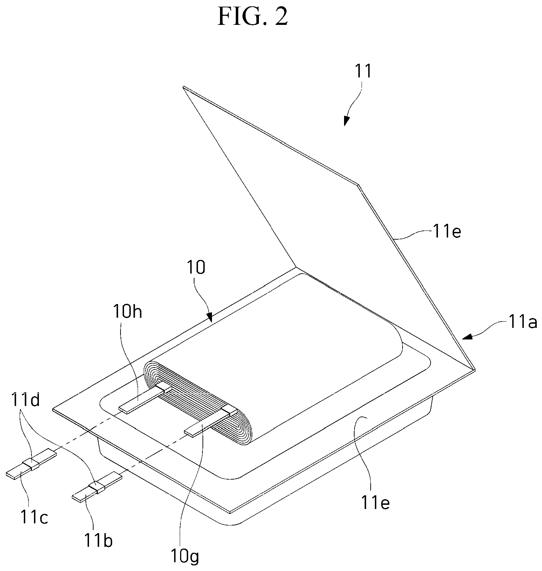

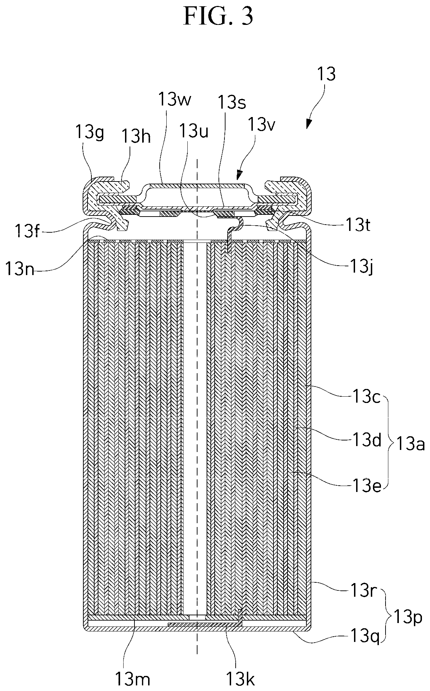

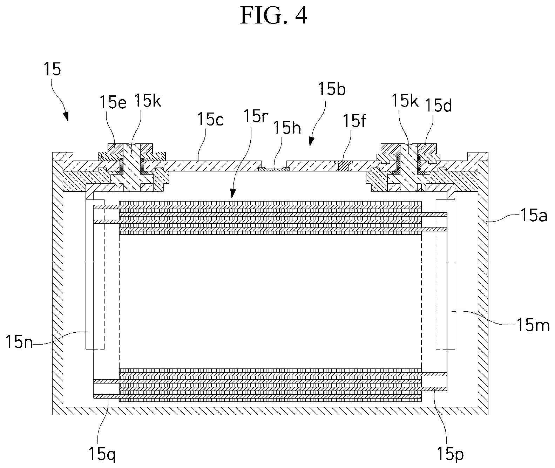

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 4).

A description is given of materials that can be used for the electrode plate of the above electrode assembly.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to an embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a perspective view of an interior of a pouch-type secondary battery 11 to which the electrode assembly 10 shown in FIG. 1 is applicable.

The pouch-type secondary battery includes the electrode assembly 10 and a pouch 11a that accommodates the electrode assembly 10.

The electrode assembly 10 may be the same as that illustrated in FIG. 1. The first electrode tab 10g and the second electrode tab 10h of the electrode assembly 10 may be electrically connected to respective external first and second terminal leads 11b and 11c by welding. Each of the first terminal lead 11b and the second terminal lead 11c may have a tab film 11d attached thereto for insulation from the pouch 11a.

The pouch 11a may be sealed by having sealing parts 11e at the edges thereof come into contact with each other while accommodating the electrode assembly 10 therein, in which case the sealing may be achieved with the tab film 11d interposed between the sealing parts 11e. The sealing parts 11e of the pouch 11a may each be made of a thermal fusion material that generally exhibits weak adhesion to metal. Thus, the thin tab film 11d may be fused to the pouch 11a between the sealing parts 11e.

FIG. 3 is a cross-sectional view of a cylindrical secondary battery to which the electrode assembly 10 shown in FIG. 1 is applicable.

The cylindrical battery 13 includes an electrode assembly 13a, a case 13p accommodating the electrode assembly 13a and an electrolyte therein, a cap assembly 13v coupled to an opening in the case 13p to seal the case 13p, and an insulating plate 13n positioned between the electrode assembly 13a and the cap assembly 13v inside the case 13p.

The electrode assembly 13a may include a first electrode 13c and a second electrode 13e positioned with a separator 13d interposed therebetween and may be wound in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case 13p. The first lead tab 13j and the second lead tab 13k may extend from the electrode assembly 13a in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f reduces or prevents movement of the electrode assembly 13a inside the case 13p and facilitates seating of the gasket 13h and the cap assembly 13v. The crimping part 13g may firmly fix the cap assembly 13v by pressing the edge of the cap assembly 13v against the gasket 13h. The case 13p may be formed of steel plated with nickel, for example.

The cap assembly 13v may be fixed to the inside of the crimping part 13g by the gasket 13h to seal the case 13p. The cap assembly 13v may include a cap up 13w, a safety vent 13s, a cap down 13t, an insulating member, and a sub plate 13u, but the cap assembly 13v is not limited to this example and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent around the protrusion part.

If excess gas is generated due to overcharging or abnormal operation of the secondary battery, the protrusion part is deformed upwardly by the pressure and separates from the sub plate 13u while the safety vent 13s is cut (e.g., bursts or tears) along the notch. The cut safety vent 13s may prevent the secondary battery 13 from exploding by allowing the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s , the cap down 13t, and the sub plate 13u may be electrically connected to the first electrode 13c of the electrode assembly 13a.

The insulating plate 13n may be positioned to be in contact with the electrode assembly 13a below the beading part 13f. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated (e.g., electrically insulated) from the electrode assembly 13a by the insulating plate. Another insulating plate 13m may be included for insulation between the electrode assembly 13a and the bottom portion 13q of the case 13p.

FIG. 4 is a cross-sectional view of a prismatic secondary battery 15 to which the electrode assembly 10 shown in FIG. 1 is applicable.

A case 15a forms the overall appearance of a prismatic battery and may be formed of a conductive metal, such as aluminum, aluminum alloy, or nickel-plated steel. In addition, the case 15a may provide (or may form) a space for accommodating an electrode assembly 15r therein.

A cap assembly 15b may include a cap plate 15c that covers the opening in the case 15a. In some embodiments, the case 15a and the cap plate 15c may be made of a conductive material. A first terminal 15d and a second terminal 15e may be electrically connected to respective positive and negative (or negative and positive) electrodes inside the case 15a and may be installed to protrude outwardly through the cap plate 15c.

An electrolyte inlet 15f and a gas discharge hole (e.g., a gas discharge opening) may be formed in the cap plate 15c, and a vent (e.g., a gas discharge device) 15h may be connected to (or placed in) the gas discharge hole. The gas discharge device 15h is opened (e.g., bursts or tears) in response to excess gas generated inside the battery and performs a degassing function.

The electrode assembly 15r may be formed by winding or stacking a first electrode plate, a separator, and a second electrode plate. When the electrode assembly 15r is a wound type, a winding axis may be parallel to the longitudinal direction of the case 15a. In some other embodiments, the electrode assembly 15r is a stack type rather than a winding type, but the shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent (or folded) into a Z-stack. In addition, one or more electrode assemblies 15r may be stacked such that long sides of the electrode assemblies 15r are adjacent to each other and accommodated in the case 15a, and the number of electrode assemblies 15r in the case 15a is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 15p (e.g., a first uncoated portion) that is a region to which the first electrode active material is not applied.

The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied.

The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

As described above, the first electrode active material and the second electrode active material may be formed by a dual slot-die. In addition, each of the first electrode active material and the second electrode active material may be formed as a single layer or two layers.

In FIG. 4, the first electrode tab 15p and the second electrode tab 15q are illustrated as being positioned on the right side and the left side of the electrode assembly 15r, respectively. However, in some other embodiments, both the first electrode tab 15p and the second electrode tab 15q may be positioned together on the right side or the left side of the electrode assembly 15r.

Here, the left side and the right side of the electrode assembly 15r are based on the battery as illustrated in FIG. 4 for convenience of explanation. The left side refers to the side of the vertical surface of the electrode assembly 15r to which the second current collector 15n is joined, and the right side refers to the opposite side to which the first current collector 15m is joined. Therefore, the terms "left side" and "right side" of the electrode assembly 15r used above may vary when the battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

The first current collector 15m and the second current collector 15n are connected to the first terminal 15d and the second terminal 15e through connection members 15k, respectively. In some embodiments, the connection members 15k may each have an outer peripheral surface that is threaded and may be fastened to the first terminal 15d and the second terminal 15e by screwing. However, the present disclosure is not limited thereto. For example, the connection members 15k may also be coupled to the first terminal 15d and the second terminal 15e by riveting or welding.

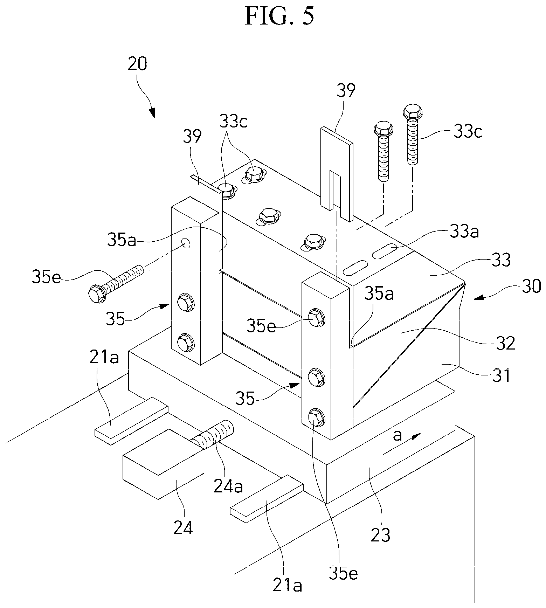

FIG. 5 is a perspective view of a slot-die unit 20 for manufacturing a secondary battery according to an embodiment of the present disclosure.

Referring to FIG. 5, the slot-die unit 20, according to an embodiment of the present embodiment, may include a dual slot-die 30, a rear support body 35, an upper die supporter, and a gap adjustment part.

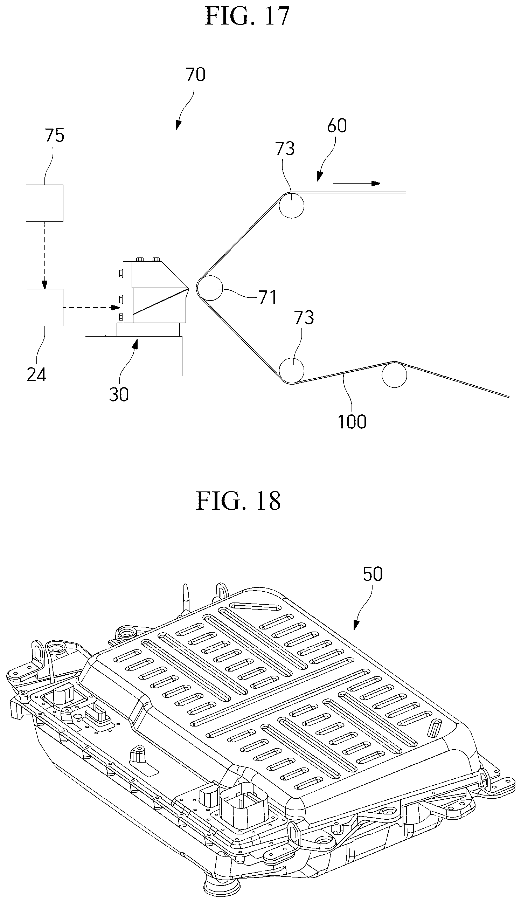

As shown in FIG. 17, the dual slot-die 30 is disposed to correspond to (e.g., is aligned with) a back roll 71 and is configured to coat a substrate 100 with an active material at it passes over the back roll 71.

In addition, the dual slot-die 30 may be mounted on a base 23. The base 23 supports the dual slot-die 30 horizontally and a position of the base 23 may be adjusted in a direction of an arrow a or an opposite direction thereof by the gap adjustment part. For convenience of description, the direction of the arrow a is defined as a forward direction toward back roll 71 and the opposite direction thereof is defined as a backward direction.

The base 23 is a block-shaped member with a height and may be supported on guide rails 21a. The position of the base 23 may be adjusted in the forward direction or the backward direction while supported on the guide rails 21a.

The gap adjustment part may adjust a gap between upper and lower discharge parts 30b and 30a (e.g., upper and lower discharge ports) and the substrate 100 supported on the back roll 71 by moving the dual slot-die 30.

The gap adjustment part may include a servo motor 24 and a lead screw 24a. The servo motor 24 may receive a control signal from the controller 75 shown in FIG. 17 to axially rotate the lead screw 24a. The lead screw 24a is a horizontally extending mechanical component and a portion of the lead screw 24a may be screw-coupled to the base 23. As the lead screw 24a is axially rotated by the servo motor 24, the base 23 moves. A transfer structure of base 23 may be implemented in various ways through other embodiments.

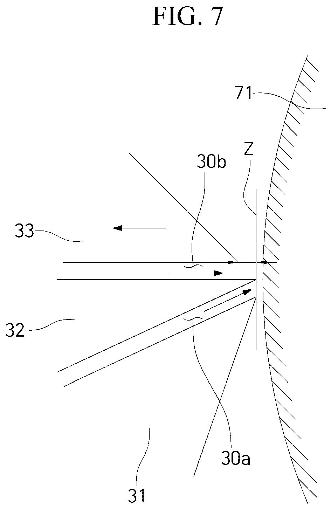

A lower die 31, a central die 32, and an upper die 33 are mutually assembled to form a single structural body and may provide (e.g., may form) the lower discharge part 30a and the upper discharge part 30b. As shown in FIG. 7, the lower discharge part 30a and the upper discharge part 30b are passages for discharging an active material in a slurry state toward the substrate 100.

The lower die 31 is a structural body fixed on the base 23 and supports the central die 32 at its upper portion (or upper surface). A storage chamber that opens upwardly and accommodates the active material may be formed in the lower die 31.

The central die 32 is a structural body configured to cover the lower die 31 while being fixed on the lower die 31. The lower discharge part 30a may be provided between (e.g., may be formed between) the central die 32 and the lower die 31. An upper surface of the central die 32 is a horizontal plane that may slidably support the upper die 33.

The upper die 33 is installed on the central die 32 and may slide forward and backward while in close contact with the upper surface of the central die 32. The upper die 33 is implemented to be slidable to further adjust a position of the upper die 33 (e.g., to adjust a position of the upper die 33 relative to the central die 32 and the lower die 31). In addition, by adjusting the position of the upper die 33 relative to the central die 32 and the lower die 31, a gap between the upper discharge part 30b and the back roll may be adjusted when a thickness difference between upper and lower coating layers occurs due to a difference in specific gravity of the slurry. Because the position of the upper die 33 may be adjusted as described above, when an active material is coated, contamination of an uncoated portion may be prevented, and the active material at beginning and end points of the coating may not be swept away.

A plurality of vertical long holes (e.g., slots) 33a may be formed in the upper die 33. The vertical long hole 33a is a hole extending in a front-rear direction of the upper die 33. The vertical long hole 33a vertically passes through the upper die 33 to allow a fixing bolt 33c to pass therethrough. The fixing bolt 33c is a die fixing member for fixing the upper die 33 to the central die 32.

After a final position of the upper die 33 is determined, the fixing bolt 33c is inserted into each vertical long hole 33a, and a lower end portion of the fixing bolt 33c is screw-coupled to the central die 32 so that a fixed state of the upper die 33 relative to the central die 32 may be maintained.

In addition, rear support bodies 35 may be installed at a rear side of the dual slot-die 30. The rear support body 35 is a structural body having a lower end portion that is fixed to an upper portion of the base 23 and may be coupled to a rear surface of the dual slot-die 30 by a plurality of tension bolts 35e. The rear support body 35 is located at a side opposite to the back roll 71 with the dual slot-die 30 interposed therebetween and may support the dual slot-die 30 toward the back roll 71.

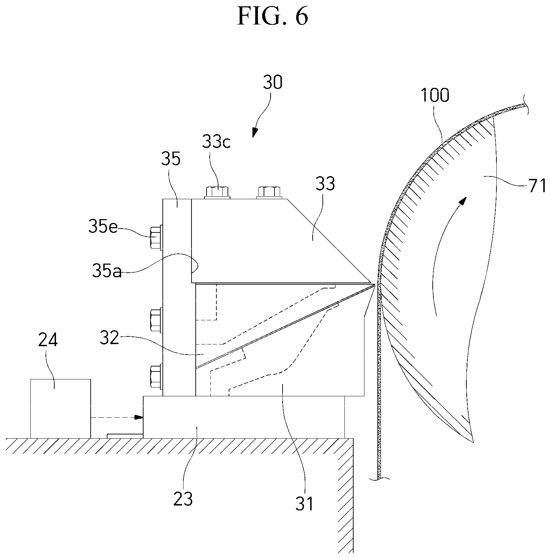

In addition, a receiving groove 35a may be formed at an upper end portion of the rear support body 35. The receiving groove 35a may receive a rear end portion of the upper die 33 when the upper die 33 is moved backward in a direction away from the back roll. FIG. 6 shows a state in which the rear end portion of the upper die 33 is inserted into the receiving groove 35a. In addition, a gap plate 39, which will be described in more detail below, may be inserted into the receiving groove 35a.

The upper die supporter may allow the upper die to slidably move forward while mounted on the dual slot-die 30, thereby adjusting and maintaining a gap between a front end portion of the upper die 33 and the substrate 100. For example, the upper die supporter moves the upper die 33 toward the back roll 71 and maintains the changed state (or changed position).

The upper die supporter may include the gap plate 39 and an upper die tension member. The gap plate 39 is a plate-shaped member with a thickness. The gap plate may have various thicknesses. For example, a set of gap plates having various thicknesses may be provided to be selectively used. The thickness of the gap plate(s) 39 may range from about 1 µm to about 300 µm.

As shown in FIG. 5, the gap plate 39 may be inserted between the rear support body 35 and the upper die 33. When the gap plate 39 is inserted, the upper die 33 may move forward as much due to the thickness of the gap plate 39. When a thicker gap plate 39 is inserted, the upper die 33 may move further forward (e.g., may more forward by the additional thickness of the thicker gap plate 39).

The upper die tension member may tension the upper die 33 toward the rear support body 35 to allow the upper die 33 to come into close contact with the gap plate 39. The upper die tension member in the present embodiment is the tension bolt 35e located at the uppermost side from among the three tension bolts inserted into the rear support body 35.

The tension bolt 35e passes through the rear support body 35 and is screw-coupled to a rear surface of the upper die 33. Because the rear support body 35 is fixed to the base 23, when the tension bolt 35e is tightened, the upper die 33 may be tensioned toward the rear support body 35.

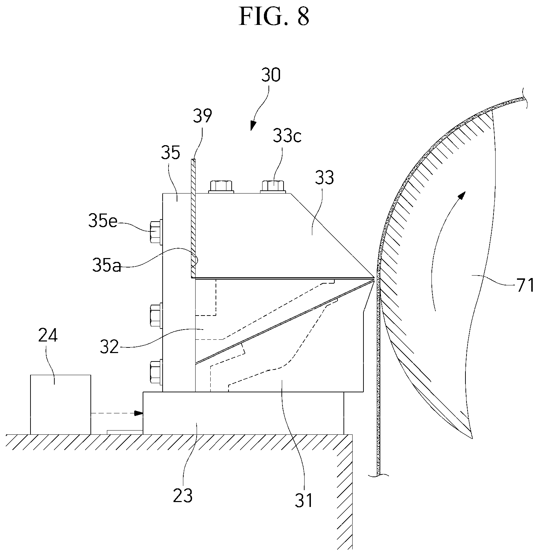

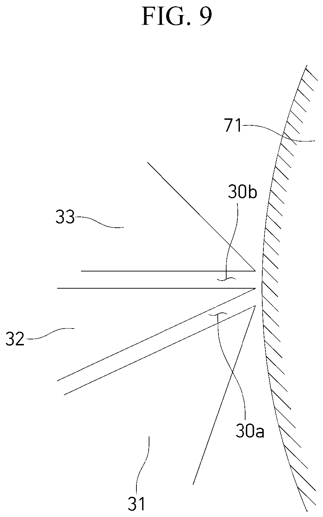

A method of adjusting the position of the upper die 33 by using the gap plate 39 is as follows. First, while the fixing bolt 33c inserted into the vertical long hole 33a and the uppermost tension bolt 35e are separated or loosened, the upper die 33 is moved forward. Next, the gap plate 39 is inserted into the receiving groove 35a and the top tension bolt 35e is tightened again (e.g., is further tightened). When the tension bolt 35e is tightened, the upper die 33 is pulled by the tension bolt 35e to come into close contact with the gap plate 39. The position adjustment of the upper die 33 is completed. FIG. 7 shows a state in which the upper die is maximally moved backward, FIG. 8 shows a state in which the upper die is aligned with the front end portion of the central die, and FIG. 9 shows a state in which the upper die is maximally moved forward. This will be described in more detail below.

FIG. 6 is a side view illustrating a state in which the upper die 33 is completely moved backward in the dual slot-die 30 shown in FIG. 5, and FIG. 7 is an enlarged view illustrating the discharge parts 30a and 30b of the dual slot-die shown in FIG. 6.

As shown in the drawings, a lower end portion of the upper die 33 is inserted into the receiving groove 35a of the rear support body 35. The gap plate 39 is not applied. Because the gap plate 39 is omitted, the upper die 33 is in a state of being moved maximally backward. As shown in FIG. 7, in this state (or configuration), the front end portion of the upper die 33 is spaced from a vertical line Z connecting front ends of the central die 32 and the lower die 31. In this way, because the upper die 33 is moved backward, a thickness of slurry discharged from the upper discharge part 30b may be increased.

FIG. 8 is a side view illustrating a state in which the gap plate is applied to the dual slot-die shown in FIG. 5, and FIG. 9 is an enlarged view illustrating the discharge parts of the dual slot-die shown in FIG. 8.

The gap plate 39 is applied to the dual slot-die 30 shown in FIG. 8. The gap plate 39 is inserted between the rear support body 35 and the upper die 33. As shown in FIG. 9, by inserting the gap plate 39, the front end portion of the upper die 33 may come closer to the substrate 100. The thickness of the slurry discharged through the upper discharge part 30b may be relatively thinner compared to that in the configuration of FIGS. 6 and 7.

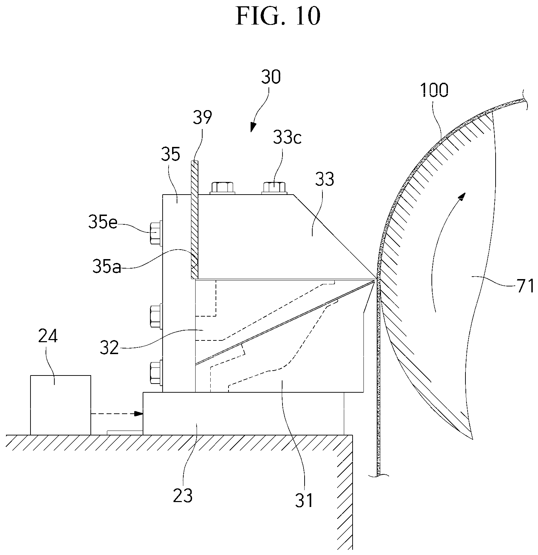

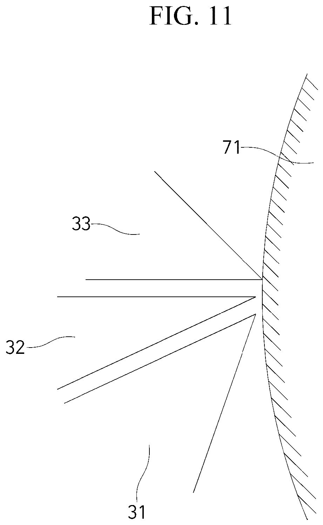

FIG. 10 is a side view illustrating a dual slot-die to which a gap plate thicker than the gap plate shown in FIG. 8 is applied, and FIG. 11 is an enlarged view illustrating the discharge parts of the dual slot-die shown in FIG. 10. As shown in FIG. 10, when a gap plate 39 thicker than the gap plate shown in FIG. 8 is applied, the front end portion of the upper die 33 comes closer to the substrate 100.

Thus, as explained above, the gap between the upper die 33 and the substrate 100 is adjustable according to (e.g., by selecting) the thickness of the gap plate 39.

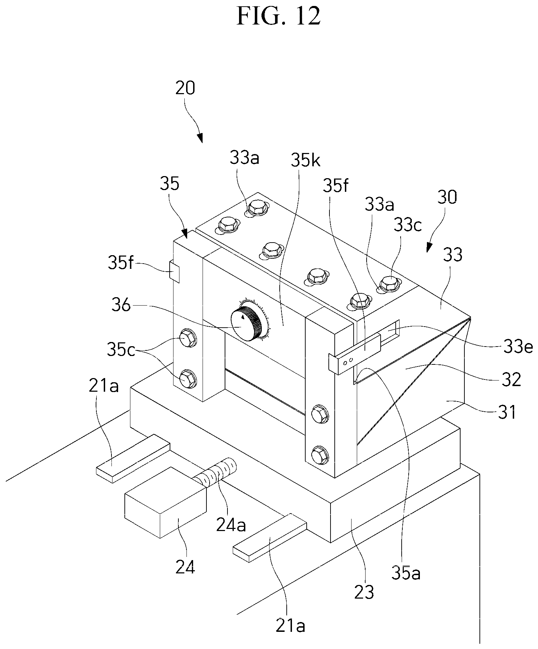

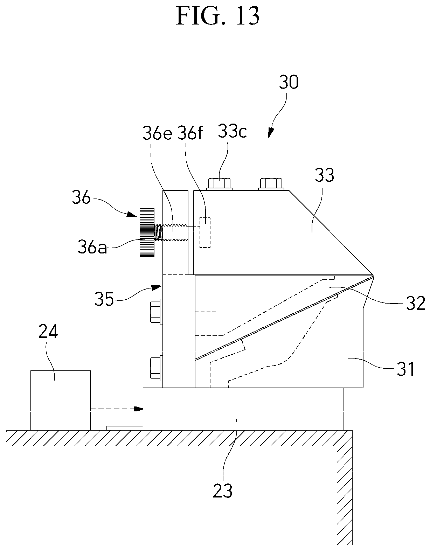

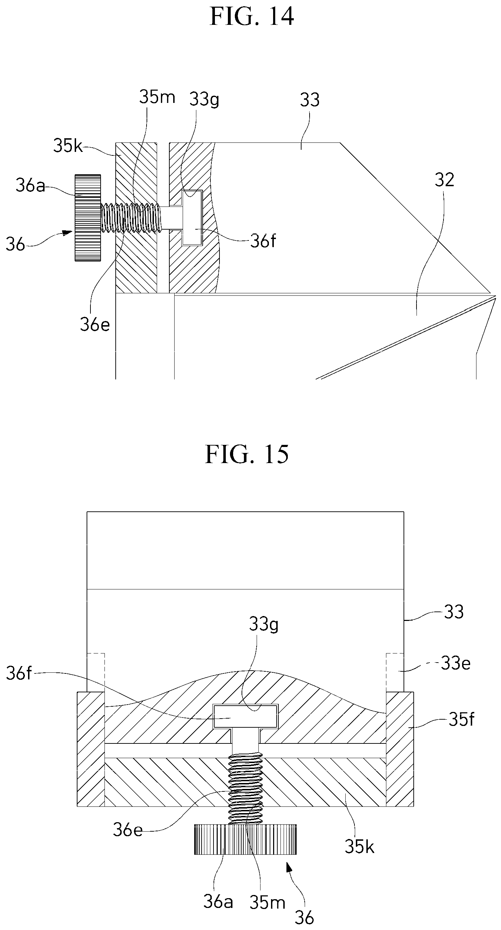

FIG. 12 is a perspective view of a slot-die unit according to another embodiment of the present disclosure, and FIG. 13 is a side view illustrating the dual slot-die shown in FIG. 12. In addition, FIGS. 14 and 15 are diagrams for describing a method of adjusting a position of the upper die shown in FIG. 13.

As shown in the drawings, a crossbar 35k may be further provided on the rear support body 35. The crossbar 35k is a part of the rear support body 35 and may cover the rear surface of the upper die 33.

In addition, a female screw hole 35m may be formed in the rear support body 35. The female screw hole 35m is a female screw hole extending horizontally. In addition, a holding groove 33g is formed in a rear portion of the upper die 33. The holding groove 33g is a groove located along an extension line of the female screw hole 35m and may rotatably receive a locking disk 36f. The locking disk 36f may be rotated while being restrained inside the holding groove 33g.

In addition, a gap adjuster 36 may be applied as an upper die supporter. The gap adjuster adjusts a gap between the upper die 33 and the rear support body 35. The gap adjuster 36 may be further provided. The gap adjuster 36 is a component operated by an operator and may include a male screw rod 36e, the locking disk 36f, and a rotating dial 36a.

The male screw rod 36e is a mechanical component that is screw-connected to the female screw hole 35m and is axially rotatable. One end portion of the male screw rod 36e may be linked to the upper die through the locking disk 36f. In addition, the rotating dial 36a may be fixed to the other end portion of the male screw rod 36e. When the rotating dial 36a is rotated, the entire gap adjuster 36 may be axially rotated so that the upper die 33 moves in a straight line.

The locking disk 36f may be a disk-shaped member with a thickness and diameter. The locking disk 36f may be rotated while being restrained in the holding groove 33g. The rotating dial 36a is fixed to the other end portion of the male screw rod 36e and may transmit a rotational force provided from the outside to the male screw rod 36e.

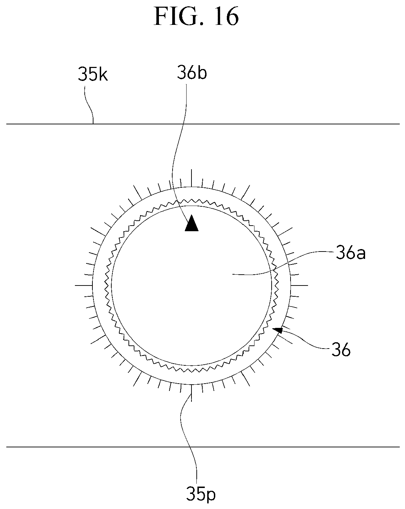

FIG. 16 is diagram illustrating a front view of the gap adjuster 36 shown in FIG. 12.

As shown in the drawing, a scale 35p may be displayed on the crossbar 35k of the rear support body 35. The scale has a substantially circular shape surrounding the rotating dial 36a and may indicate a rotation angle of the rotating dial 36a.

In addition, a scale index 36b is marked on the rotating dial 36a. For example, the scale index 36b is an arrow indicating the scale 35p. The rotation angle of the gap adjuster 36 may be determined precisely through the scale index 36b and the scale 35p. When an angle of the gap adjuster 36 is determined, a forward and backward movement distance of the upper die 33 may be determined through a simplified calculation.

In addition, as shown in FIG. 12, guide grooves 33e may be formed on both sides of the upper die 33. The guide groove 33e is a straight groove extending horizontally. In addition, horizontal extension arms 35f are provided on both sides of the rear support body 35. The horizontal extension arm 35f is inserted into the guide groove 33e and may guide the sliding movement of the upper die.

FIG. 17 is a schematic diagram of a secondary battery manufacturing device 70 according to an embodiment of the present disclosure.

As shown in the drawing, the secondary battery manufacturing device 70, according to the present embodiment, may include a substrate transfer part 60, a slot-die unit 20, and a controller 75.

The substrate transfer part 60 may transfer a substrate 100 along a transfer path. The substrate transfer part 60 may include a plurality of guide rolls 73 and a back roll 71. The guide roll 73 may maintain the tension of the substrate 100 during transfer. In addition, the back roll 71 corresponds to (e.g., is aligned with) the dual slot-die 30 and may support the substrate 100 when an active material is coated thereon. In addition, as described above, the controller 75 may control the operation of the servo motor 24.

FIG. 18 is a perspective view of a secondary battery pack manufactured by the secondary battery manufacturing device according to an embodiment of the present disclosure.

The secondary battery pack 50 may be manufactured by embedding a plurality of secondary battery modules in a pack housing designed to be mounted on a product (e.g., an end-use product). The pack housing can include a fastening portion and an electrical outlet portion for mounting on a product. In Fig. 18, for convenience of illustration, bus bars for electrical connection of secondary batteries, cooling units, external terminals, and other related elements are omitted.

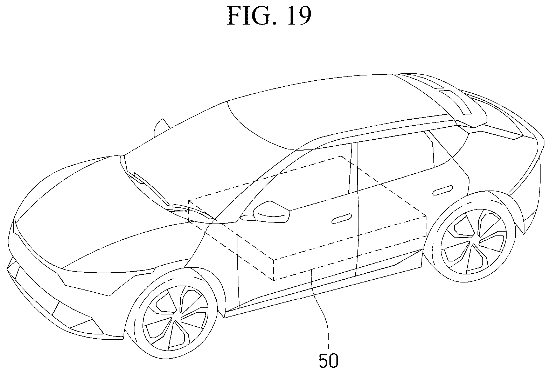

The secondary battery pack can be mounted on a vehicle. The vehicle may be, for example, an electric vehicle, a hybrid vehicle, or a plug-in hybrid vehicle. The vehicle includes a four-wheel drive or two-wheel drive vehicle. FIG. 19 is a diagram illustrating a state in which the secondary battery pack shown in FIG. 18 is applied to a vehicle. It illustrates a configuration in which the secondary battery pack 50, according to an embodiment of the present disclosure, is mounted on (or to) a lower portion of a vehicle body of a vehicle. The vehicle operates by power received from the secondary battery pack 50 according to an embodiment of the present disclosure.

According to a secondary battery manufacturing device and a slot-die unit for manufacturing a secondary battery, which are formed as described above, an individual gap between a slurry discharge part and a back roll can be adjusted such that multi-layered electrode layers with different thicknesses can be formed, and when intermittent (e.g., pattern) coating is performed, contamination of an uncoated portion or dragging of front and rear ends of a coated portion can be prevented.

Although the present disclosure has been described above with respect to embodiments thereof, the present disclosure is not limited thereto. Various modifications and variations can be made thereto by those skilled in the art within the spirit of the present disclosure as defined by the appended claims and their equivalents.

## Claims

1. A slot-die unit (20) for manufacturing a secondary battery, the slot-die-unit (20) including a dual slot-die (30) being configured to be arranged to correspond to a substrate (100) to be coated with an active material, the dual slot-die (30) comprising:
a lower die (31);
a central die (32) fixed on the lower die (31); and
an upper die (33) slidably on an upper surface of the central die (32), and
wherein a lower discharge port (30a) is formed between the lower die (31) and the central die (32) and an upper discharge port (30b) is formed between the central die (32) and the upper die (33), the lower and upper discharge ports (30a, 30b) being configured to discharge the active material to be coated on the substrate (100).

2. The slot-die unit (20) as claimed in claim 1, further comprising an upper die supporter configured to slide the upper die (33) to adjust and maintain a gap between the upper die (33) and the substrate (100).

3. The slot-die unit (20) as claimed in claim 2, further comprising a rear support body (35),
wherein the dual slot-die (30) is configured to be aligned with a back roll (71) configured to support the substrate (100) to be coated with the active material, and
wherein the rear support body (35) is configured to support the dual slot-die (30) toward the back roll (71) with the dual slot-die (30) between the rear support body (35) and the back roll (71) at a side opposite to the back roll (71).

4. The slot-die unit (20) as claimed in claim 3, wherein the upper die supporter comprises:
a gap plate (39) between the rear support body (35) and the upper die (33); and
an upper die tension member configured to tension the upper die (33) toward the rear support body (35) so that the upper die (33) comes into close contact with the gap plate (39).

5. The slot-die unit (20) according to claim 4, wherein:
the upper die (33) has a plurality of vertical long holes (33a) extending in a sliding direction of the upper die (33); and
the upper die (33) is fixed to the central die (32) by a plurality of die fixing members (33c), each having a lower end portion coupled to the central die (32) through the vertical long hole (33a) in the upper die (33).

6. The slot-die unit (20) as claimed in claim 3 or 5, wherein the rear support body (35) has a female screw hole (35m) extending horizontally therein, and
wherein the upper die supporter comprises:
a male screw rod (36e) that is screw-coupled to the female screw hole (35m) and is axially rotatable, one end portion of the male screw rod (36e) being connected to the upper die (33) and another end portion thereof extending away from the upper die (33); and
a rotating dial (36a) fixed to the other end of the male screw rod (36e) and configured to transmit a rotational force to the male screw rod (36e).

7. The slot-die unit (20) as claimed in claim 6, wherein:
a disk-shaped locking disk (36f) is at one end portion of the male screw rod (36e); and
the upper die (33) has a holding groove (33g) configured to rotatably restrict the locking disk (36f).

8. The slot-die unit (20) as claimed in any of claims 3, or 5 to 7, wherein:
the upper die (33) has a guide groove (33e) extending horizontally; and
the rear support body (35) comprises a horizontal extension arm (35f) inserted into the guide groove (33e) and configured to guide sliding movement of the upper die (33).

9. The slot-die unit (20) according to any of the previous claims, further comprising:
a base (23) below the dual slot-die (30) and supporting the dual slot-die (30); and
a gap adjustment part configured to adjust a gap between the dual slot-die (30) and the substrate (100) by linearly moving the base (23).

10. The slot-die unit (20) as claimed in claim 9, wherein the gap adjustment part comprises a servo motor (24) configured to receive a control signal from a controller (75) and to move the base (23) linearly.

11. The slot-die unit (20) as claimed in claim 9 or 10, wherein the slot-die unit (20) comprises guide rails (21a) being configured to support the base (23).

12. A secondary battery manufacturing device (70) comprising:
a substrate transfer part (60) configured to transfer a substrate (100) along a transfer path;
a dual slot-die unit (20) configured according to any of the previous claims,
and a controller (75) configured to drive a gap adjustment part of the dual slot die unit (20).

13. The secondary battery manufacturing device as claimed in claim 12, wherein the substrate transfer part comprises a back roll (71) configured to support the substrate (100) when the active material is coated thereon, and
wherein a rear support body (35) of the slot die unit (20) is configured to support the dual slot-die (30) toward the back roll (71) with the dual slot-die (30) interposed between the rear support body (35) and the back roll (71) at a side opposite to the back roll (71).

14. The secondary battery manufacturing device (70) as claimed in claim 12 or 13, wherein the controller (24) is configured to drive the servo motor (24) of the slot-die unit (20) to move the base linearly.

15. Method for adjusting a gap between an upper die (33) and a substrate (100), the method being performed with the slot-die unit (20) configured according to any of claims 12 to 14, the method comprising the steps of
- Adjusting a position of the upper die (33) by slidingly moving the upper die (33) with the upper die supporter, or
- Adjusting a position of the upper die (33) by selecting the thickness of the gap plate (39); or
the method being performed with the secondary battery manufacturing device (70) configured according to any of claims 12 to 14, the method comprising the steps of
- Receiving a control signal from the controller (75) and adjusting the gap by moving the dual slot-die (30) based on the control signal with the servo motor (24), and/or
- Adjusting a position of the upper die (33) by slidingly moving the upper die (33) with the upper die supporter, or
- Adjusting a position of the upper die (33) by selecting the thickness of the gap plate (39).
